# EUROPÄISCHE PATENTANMELDUNG

(11) **EP 1 742 241 A2**
(43) Veröffentlichungstag der Anmeldung: **10.01.2007**
(21) Anmeldenummer: 06011328.9
(22) Anmeldetag: 01.06.2006
(51) Int. Cl.: H01H 33/66, H01H 9/42, B63H 21/17, B63G 8/08, H02J 7/34

(54) **Wasserfahrzeug mit einem Gleichstromnetz mit einem Vakuumschalter**

(30) Priorität: 07.07.2005 DE 102005031761
(71) Anmelder: Howaldtswerke-Deutsche Werft GmbH, 24143 Kiel (DE)
(72) Erfinder: Buder, Ingo, Dipl.-Ing., 23617 Stockelsdorf (DE)
(74) Vertreter: Vollmann, Heiko

(57) **Zusammenfassung**

Das Wasserfahrzeug weist eine Gleichstromquelle und einen elektrischen Verbraucher auf, die über einen Leistungsschalter (6) miteinander verbindbar sind. Der Leistungsschalter (6) ist als Vakuumschalter ausgebildet und weist eine Kommutierungseinrichtung (9) auf, welche den beim Öffnen des Schalters entstehenden Lichtbogen löscht.

## Beschreibung

Die Erfindung betrifft ein Wasserfahrzeug, insbesondere ein Unterseeboot mit den im Oberbegriff des Anspruchs 1 angegebenen Merkmalen.

Bei Unterseebooten kleiner und mittlerer Baugröße erfolgt die Energieversorgung unter Wasser typischerweise aus Batterien und/oder Brennstoffzellen, also aus einem Gleichstromnetz. Mit wachsender Größe der Fahrzeuge wächst auch deren Energiebedarf, sowohl für den oder die Fahrmotoren als auch für die Versorgung des Bordnetzes. Da eine Spannungserhöhung aus verschiedenen Gründen nur bedingt möglich ist, kann diesen erhöhten Energieanforderungen nur durch höhere Ströme Rechnung getragen werden. Hierbei kommen jedoch die üblicherweise eingesetzten Leistungsschalter an ihre Grenzen. Die derzeit eingesetzten Leistungsschalter sind mechanische Schalter in offener Bauweise, welche einen erheblichen Platz beanspruchen. Die Schalter benötigen hinter ihrer Lichtbogenkammer einen zusätzlichen Freiraum von etwa 0,6 Meter, der zum Ausblasen des Lichtbogens benötigt wird. Mit steigender Spannung und steigenden Strömen wachsen die Abmessungen solcher Leistungsschalter überproportional, was insbesondere auf Unterseebooten, wo das Raumangebot eng begrenzt ist, von Nachteil ist.

Aber auch auf anderen Wasserfahrzeugen tritt dieses Problem zunehmend auf, und sei es auch nur für die erforderliche Gleichstromversorgung elektromagnetischer Waffen.

Vor diesem Hintergrund liegt der vorliegenden Erfindung die Aufgabe zugrunde, ein gattungsgemäßes Wasserfahrzeug, insbesondere Unterseeboot so auszurüsten, dass die Leistungsschalter weniger Platz beanspruchen und nach Möglichkeit höhere Ströme bei gleichen oder höheren Spannungen schalten können.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Die Erfindung sieht somit ein Wasserfahrzeug, insbesondere ein Unterseeboot vor, das mindestens eine Gleichstromquelle, insbesondere eine Batterie- und/oder Brennstoffzellenanlage aufweist und mindestens einen elektrischen Verbraucher wie beispielsweise Fahrmotor, Bordnetz, elektromagnetische Waffe oder dgl. Weiterhin ist mindestens ein Leistungsschalter zwischen Gleichstromquelle und Verbraucher vorgesehen, typischerweise sind jedoch mehrere solcher Leistungsschalter vorgesehen. Gemäß der Erfindung ist ein solcher Leistungsschalter als Vakuumschalter ausgebildet sowie darüber hinaus mit einer Kommutierungseinrichtung versehen, welche den im Vakuumschalter beim Öffnen des Schalters entstehenden Vakuumlichtbogen löscht.

Grundgedanke der vorliegenden Erfindung ist es also, einen platzaufwendigen und auch mechanisch hoch beanspruchten konventionellen Leistungsschalter, insbesondere in einem Unterseeboot, wo der Raumbedarf eng begrenzt ist, durch einen Vakuumschalter zu ersetzen, der eine wesentlich kleinere Baugröße bei vergleichbarer Schaltleistung aufweist und einem geringeren Verschleiß unterworfen ist. Um den beim Einsatz eines Vakuumschalters beim Schalten von Gleichstrom innerhalb des Schalters entstehenden Lichtbogen zu löschen ist eine Kommutierungseinrichtung vorgesehen, welche so ausgebildet und angesteuert ist, dass unmittelbar nach Erzeugen des Lichtbogens der Vakuumschalter mit einem entgegengesetzt gerichteten Strom beaufschlagt wird, der den im Lichtbogen fließenden Strom kompensiert oder zumindest soweit vermindert, dass der Lichtbogen zum Erlöschen kommt.

Vakuumschalter als solche sind bekannt, sie werden jedoch bisher typischerweise zum Schalten von Wechselströmen eingesetzt, da dort aufgrund des Nulldurchgangs der Lichtbogen selbsttätig erlischt. Es wird in diesem Zusammenhang auf Lippmann, Hans-Joachim, Schalten im Vakuum, Physik und Technik der Vakuumschalter, VDE-Verlag 12/2002 (ISBN 3-8007-2317-4) verwiesen. Zwar ist dort auch schon die grundsätzliche Möglichkeit erwähnt, Vakuumschalter in Form von Vakuumschaltröhren zum Schalten von Gleichstrom einzusetzen, allerdings nur für den Mittelspannungsbereich über 1,5 kV.

Gleichstrom-Mittelspannungsnetze werden jedoch typischerweise bei Wasserfahrzeugen, insbesondere Unterseebooten nicht eingesetzt. Die in Wasserfahrzeugen, insbesondere Unterseebooten zu handhabenden Spannungen liegen typischerweise unter 1000 Volt.

Durch den Einsatz von Vakuumschaltern in Verbindung mit Zwangskommutierungseinrichtungen kann der Einbauraum für die Leistungsschalter ganz erheblich reduziert werden, wobei nicht nur die Reduzierung der Baugröße und damit auch des Gewichts der Schalter Vorteile bringt, sondern auch der sonst übliche Freiraum für die Ausblasstrecke entfallen kann. Schließlich können bei Einsatz von Vakuumschaltern auch auf die sonst einem mechanischen Leistungsschalter vorgeschalteten Sollschmelzstellen aus Kupfer verzichtet werden, die dazu dienen, im Kurzschlussfalle den Kurzschlussstrom durch Abschmelzen in einem Lichtbogen auf einen Strom zu begrenzen, der mit den vorhandenen Schaltern schaltbar ist.

Ein weiterer wesentlicher Vorteil des Vakuumschalters ist sein geringer Übergangswiderstand in Folge einer nicht vorhandenen Oxydationsschicht. Auch die Erwärmung und damit die Verluste innerhalb des Schalters sind bei einem Vakuumschalter wesentlich geringer als bei einem konventionellen mechanischen Schalter nach dem Stand der Technik. Da die Schaltleistungsverluste gering sind, ist auch die Belastung des Schalters selbst deutlich geringer, wodurch die Lebensdauer eines Vakuumschalters wesentlich größer als die eines konventionellen mechanischen Schalters mit Ausblastechnik ist. Dabei werden für die Schaltkontakte bevorzugt Chrom-Kupfer-Legierungen eingesetzt. Ein weiterer wesentlicher Vorteil des Vakuumschalters ist das geringere Gefährdungspotenzial, da der Lichtbogen nicht in die Umgebung austritt, sondern innerhalb des geschlossenen Schaltergehäuses entsteht. Systembedingt weist der Vakuumschalter einen geringeren Schaltleistungsumsatz wegen niedrigerer Brennspannung des Metalldampfbogens und schneller Wiederverfestigung der Schaltstrecke auf. Auch sind die Schaltzeiten wegen der geringeren Kontaktabstände und dem dadurch bedingten kleineren Kontakthub deutlich kürzer als bei den bekannten mechanischen Schaltern mit Ausblastechnik. Schließlich ist das größere Schaltvermögen und die längere Lebensdauer von Vorteil.

Der als Leistungsschalter eingesetzte Vakuumschalter kann grundsätzlich beliebige Bauart aufweisen, besonders raumsparend ist jedoch ein Vakuumschalter mit einem zylindrischen Gehäuse, in dem die Schaltkontakte in Richtung der Gehäuselängsachse in ihrem Abstand zueinander veränderbar sind.

Dabei ist es grundsätzlich von Vorteil, wenn die Kommutierungseinrichtung außerhalb des Schaltergehäuses angeordnet ist, so dass das Vakuum auf einen möglichst kleinen Raum begrenzt bleibt und eine Abdichtung zwischen beweglichen Teilen nur zwischen dem Gehäuse und dem bewegbar innerhalb des Gehäuses gelagerten Schaltkontakt erforderlich ist. Die Kommutierungseinrichtung wird jedoch bevorzugt in unmittelbarer Nähe zum Schalter angeordnet, um die Leitungswege kurz zu halten, sie kann jedoch auch entfernt vom eigentlichen Vakuumschalter angeordnet sein.

Die Kommutierungseinrichtung kann auf vielfältige Weise aufgebaut sein. Eine bevorzugte Kommutierungseinrichtung weist einen parallel zum Vakuumschalter liegenden Kommutierungsschaltkreis auf, der einen Schalter, beispielsweise in Form eines Thyristors aufweist sowie einen Ladungsträger. Über einen entsprechende Steuerungseinrichtung wird sichergestellt, dass unmittelbar nach Öffnen des Vakuumschalters der Schalter so angesteuert wird, dass der Ladungsträger parallel zum Vakuumschalter und gegensinnig gepolt geschaltet wird um den im Schalter beim Öffnen entstehenden Lichtbogen zu löschen. Darüber hinaus weist die Kommutierungseinrichtung Mittel zum Laden des Ladungsträgers auf, damit sichergestellt ist, dass beim Öffnen des Vakuumschalters stets der Ladungsträger ausreichend geladen ist, um den erforderlichen Kompensationsstrom zum Löschen des Lichtbogens zu erzeugen. Als Ladungsträger kann vorteilhaft ein Kondensator dienen, der typischerweise aus mehreren parallel und in Serie geschalteten Einzelkondensatoren aufgebaut sein kann.

Alternativ kann anstelle eines Ladungsträgers auch ein Ladungserzeuger vorgesehen sein, der von der Steuereinrichtung so angesteuert wird, dass nach dem Öffnen des Vakuumschalters der Ladungserzeuger zur Kompensierung des im Lichtbogen des Vakuumschalters fließenden Stromes angesteuert wird. Ein solcher Ladungserzeuger kann beispielsweise durch eine elektrische Spule gebildet sein, welche eine dynamische Änderung ihrer elektrischen und/oder elektromagnetischen Zustands erfährt. Auch auf diese Weise kann ein geeigneter Kompensationsstrom erzeugt werden, welcher den beim Öffnen des Vakuumschalters entstehenden Lichtbogen löscht.

Die Erfindung ist nachfolgend anhand eines Ausführungsbeispiels im Einzelnen erläutert. Es zeigen
- Fig. 1: in stark vereinfachter schematischer Schaltbildarstellung den Aufbau eines Gleichstromnetzes eines Unterseebootes und
- Fig. 2: in vereinfachter Schaltbilddarstellung einen Vakuumschalter mit Kommutierungseinrichtung.

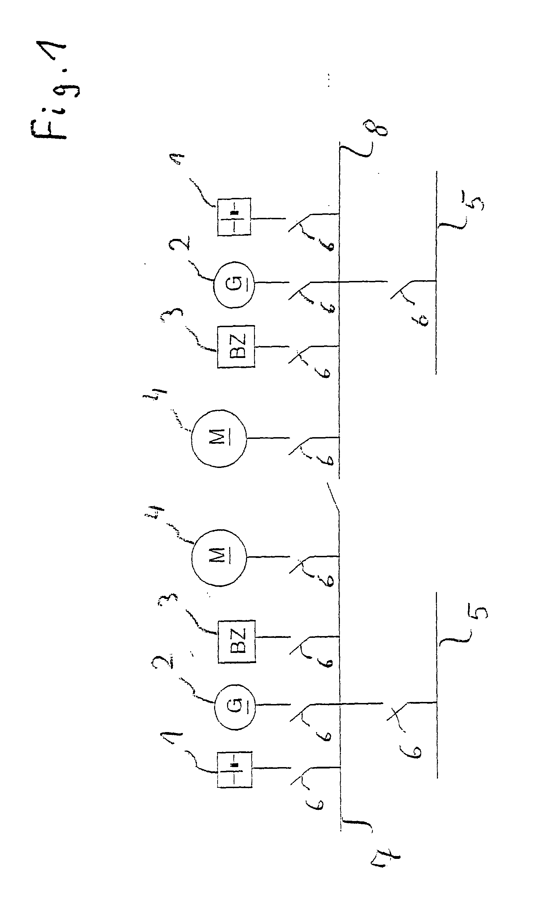

In Fig. 1 ist beispielhaft der grundsätzliche Aufbau eines elektrischen Versorgungsnetzes eines Unterseebootes dargestellt. Es handelt sich hierbei um ein Gleichstromnetz, das zur Vereinfachung einpolig dargestellt ist. Das Versorgungssystem ist redundant aufgebaut und besteht jeweils aus einer Batterie 1, einem Generator 2, einer Brennstoffzelle 3, einem Fahrmotor 4 und einem Bordnetz 5. Dabei stellen Batterie 1, Generator 2 und Bennstoffzelle 3 Gleichstromquellen dar, wohingegen Motor 4 und Bordnetz 5 elektrische Verbraucher sind. Sowohl die Stromquellen 1, 2, 3 als auch die Verbraucher 4, 5 sind über Leistungsschalter 6 an jeweils einen Versorgungsstrang 7 bzw. 8 des elektrischen Netzes angeschlossen, wobei die Versorgungsstränge 7 und 8 ebenfalls über einen Leistungsschalter 6 miteinander verbindbar sind, so dass im Fall eines Kurzschlusses oder Ausfalls von Stromquellen und/oder Verbrauchern mittels der Leistungsschalter 6 entsprechende Schaltungen zu Überbrückung bzw. Abschaltung realisiert werden können.

Die Leistungsschalter 6 sind als Vakuumschalter ausgebildet und weisen jeweils eine Kommutierungseinrichtung 9 auf, die einen parallel an dem Vakuumschalter 6 angeschlossenen Kommutierungsschaltkreis 10 sowie eine elektronische Steuereinrichtung 11 aufweist. Der Kommutierungsschaltkreis 10 weist eine Diode 12, einen Kondensator 13 sowie einen elektronischen, von der Steuereinrichtung 11 gesteuerten Schalter 14 auf. Die Diode 12, der Kondensator 13 und der Schalter 14 liegen in Reihe im Kommutierungsschaltkreis 10, der parallel zum Vakuumschalter 6 geschaltet ist. Weiterhin weist die Kommutierungseinrichtung 9 eine Ladeeinrichtung 15 auf, welche zum Aufladen des Kondensators 13 dient.

Der Vakuumschalter 6 weist ein im Wesentlichen zylindrisches Gehäuse 16 auf, das zu beiden Enden hin abgestuft ausgebildet ist und an einem Ende einen festen Anschlusskontakt 17 sowie am anderen Ende einen beweglichen Anschlusskontakt 18 trägt. Das zylindrische Gehäuse 16 bildet die eigentliche evakuierte Schaltkammer, innerhalb der ein feststehender Schaltkontakt 19 und ein in Achsrichtung des Gehäuses 11 beweglich angeordneter Schaltkontakt 20 angeordnet sind. Um das Gehäuse 16 gegenüber den endseitigen Anschlusskontakten 17 und 18 zu isolieren, ist dieses im abgestuften Bereich als Isolator 21 ausgebildet.

Stirnseitig wird das Gehäuse 16 am Ende des Isolators 21 dicht durch ein scheibenförmiges Teil 22 abgeschlossen, das als Drehteil einstückig mit dem daran nach außen anschließenden festen Anschlusskontakt 17 sowie dem festen Schaltkontakt 19, verbunden über ein bolzenförmiges Teil 23, ausgebildet ist.

Auch der beweglich angeordnete Schaltkontakt 20 ist über einen bolzenförmiges Teil 24 mit einem demgegenüber aufgeweiteten zylindrischen Abschnitt 25 verbunden, an dessen zum beweglichen Anschlusskontakt 18 weisender Stirnseite ein Faltenbalg 26 angebracht ist, dessen anderes Ende mit einer den Isolator 21 dort stirnseitig abschließenden Platte 27 verbunden ist. Da der Faltenbalg 26 dicht an dem zylindrischen Abschnitt 25 sowie die Platte 27 anschließt, kann der Anschlusskontakt 18 zusammen mit dem zylindrischen Abschnitt 25, dem bolzenförmigen Teil 24 und dem daran befindlichen Schaltkontakt 20 in Achsrichtung des Gehäuses 16 verschoben werden, um den Schalter 6 zu öffnen bzw. zu schließen. Hierzu ist am Ende des beweglichen Schaltkontaktes 20 ein Anschluss 28 für einen mechanischen Antrieb vorgesehen.

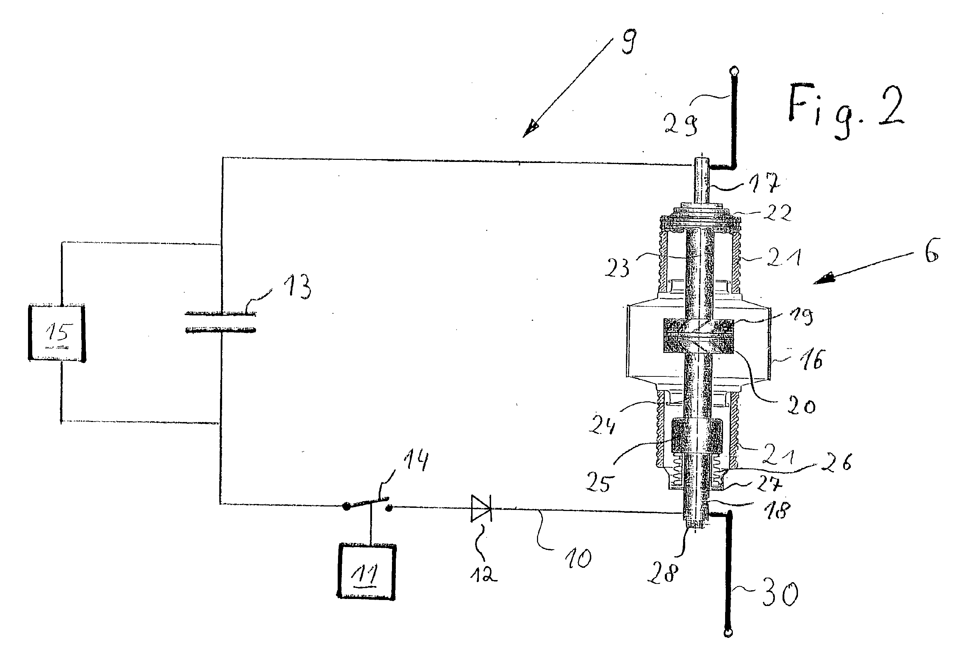

Bei geschlossenem (in Fig. 2 dargestellten) Vakuumschalter 6 fließt ein Strom von beispielsweise mehreren 1000 A über eine Leitung 29 zum festen Anschlusskontakt 17 zum Schaltkontakt 19, der dann am Schaltkontakt 20 anliegt, so dass der Strom über letzteren zum beweglichen Anschlusskontakt 18 und von dort in die Leitung 30 fließt. Der Kommutierungsschaltkreis 10 ist dabei geöffnet, der Kondensator 13 durch die Ladeeinrichtung 15 geladen.

Wenn nun der bewegliche Schaltkontakt 20 durch entsprechende Bewegung am Ende 28 vom feststehenden Schaltkontakt 19 weggezogen wird, so bildet sich zwischen den Kontakten 19 und 20 ein Lichtbogen aus, der aufgrund des Vakuums ein Plasmalichtbogen ist. Unmittelbar nach Öffnen des Leistungsschalters 6 schließt die Steuereinrichtung 11 den Schalter 14, wodurch der Kondensator 13 über den Kommutierungsschaltkreis 10 mit den Anschlusskontakten 17 und 18 des Vakuumschalters leitend verbunden wird. Der Kondensator 13 ist dabei so geladen, dass in dem Kommutierungsschaltkreis 10 ein Strom fließt, der entgegengerichtet zu dem im Lichtbogen innerhalb des Vakuumschalters 6 fließenden Stromes ist. Dabei ist die Kondensatorladung 13 so dimensioniert, dass der durch den Kommutierungsschaltkreis 10 fließende Gegenstrom ausreicht, um den Lichtbogen innerhalb des Vakuumschalters 6 zu löschen.

Sobald der Lichtbogen gelöscht ist, steuert die Steuereinrichtung 11 den Schalter 14 wieder öffnend an, trennt also den Kommutierungsschaltkreis 10 vom Vakuumschalter 6, wonach die Ladeeinrichtung 15 den Kondensator 13 erneut lädt, so dass beim nächsten Schaltvorgang, wenn der Leistungsschalter 6 geschlossen und anschließend wieder geöffnet wird, der vorbeschriebene Kommutierungsvorgang erneut ablaufen kann.

### Bezugszeichenliste

- 1: Batterie
- 2: Generator
- 3: Brennstoffzelle
- 4: Fahrmotor
- 5: Bordnetz
- 6: Leistungsschalter
- 7: Versorgungsstrang
- 8: Versorgungsstrang
- 9: Kommutierungseinrichtung
- 10: Kommutierungsschaltkreis
- 11: Steuereinrichtung
- 12: Diode
- 13: Kondensator
- 14: Elektronischer Schalter
- 15: Ladeeinrichtung
- 16: Gehäuse
- 17: Fester Anschlusskontakt
- 18: Beweglicher Anschlusskontakt
- 19: Fester Schaltkontakt
- 20: Beweglicher Schaltkontakt
- 21: Isolatoren
- 22: Scheibenförmiger Teil
- 23: Bolzenförmiger Teil
- 24: Bolzenförmiger Teil
- 25: Zylindrischer Abschnitt
- 26: Faltenbalg
- 27: Platte
- 28: Ende
- 29: Leitung
- 30: Leitung

## Patentansprüche

1. Wasserfahrzeug, insbesondere Unterseeboot, mit mindestens einer Gleichstromquelle (1, 2, 3), insbesondere einer Batterie- und/oder Brennstoffzellenanlage, und mit mindestens einem elektrischen Verbraucher (4, 5) wie Fahrmotor, Bordnetz oder dgl., und mit mindestens einem Leistungsschalter (6) zwischen Gleichstromquelle (1, 2, 3) und Verbraucher (4, 5), **dadurch gekennzeichnet, dass** der Leistungsschalter (6) durch einen Vakuumschalter (6) gebildet ist, welcher eine Kommutierungseinrichtung (9) aufweist.

2. Wasserfahrzeug nach Anspruch 1, **dadurch gekennzeichnet, dass** der Vakuumschalter (6) ein im Wesentlichen zylindrisches Gehäuse (16) aufweist und dass der Abstand der Schaltkontakte (19, 20) in Richtung der Längsachse des Gehäuses (16) zueinander veränderbar ist.

3. Wasserfahrzeug nach einem der vorhergehenden Ansprüche, **dadurch gekennzeichnet, dass** die Kommutierungseinrichtung (9) außerhalb des Gehäuses (16) angeordnet ist.

4. Wasserfahrzeug nach einem der vorhergehenden Ansprüche, **dadurch gekennzeichnet, dass** die Kommutierungseinrichtung (9) einen parallel zum Vakuumschalter (6) liegenden Kommutierungsschaltkreis (10) mit einem Schalter (14) und mindestens einem Ladungsträger (13) aufweist sowie eine Steuereinrichtung (11), welche nach dem Öffnen des Vakuumschalters (6) den Schalter (14) so ansteuert, dass der Ladungsträger (13) parallel zum Vakuumschalter (6) und gegensinnig gepolt geschaltet ist, wobei Mittel (15) zum Laden des Ladungsträgers vorgesehen sind.

5. Wasserfahrzeug nach einem der vorhergehenden Ansprüche, **dadurch gekennzeichnet, dass** die Kommutierungseinrichtung (9) einen parallel zum Vakuumschalter (6) liegenden Kommutierungsschaltkreis (10) mit einem Ladungserzeuger aufweist sowie eine Steuereinrichtung, welche nach dem Öffnen des Vakuumschalters (6) den Ladungserzeuger zur Kompensierung des im Lichtbogen des Vakuumschalters (6) fließenden Stroms ansteuert.
